# FASCICULE DE BREVET EUROPEEN

(11) **EP 2 908 934 B1**
(45) Date de publication et mention de la délivrance du brevet: **30.08.2017**
(21) Numéro de dépôt: 13782756.4
(22) Date de dépôt: 24.09.2013
(51) Int. Cl.: B01J 8/00, B01J 8/06

(54) **MÉTHODE UTILISANT UN SYSTÈME PNEUMATIQUE DE CHARGEMENT DENSE DE CATALYSEUR DANS DES TUBES A BAIONNETTE POUR RÉACTEUR ÉCHANGEUR DE VAPOREFORMAGE AVEC TUBE D'AMENEE DE GAZ AMOVIBLE**
VERFAHREN MIT EINEM PNEUMATISCHEN SYSTEM FÜR DICHTE KATALYSATORBELADUNG IN BAJONETTRÖHREN FÜR EINEN DAMPFREFORMIERUNGSREAKTOR-TAUSCHER MIT EINEM ABNEHMBAREN GASVERSORGUNGSROHR
METHOD USING A PNEUMATIC SYSTEM FOR DENSE CATALYST LOADING IN BAYONET TUBES FOR A STEAM REFORMING REACTOR-EXCHANGER, COMPRISING A REMOVABLE GAS SUPPLY TUBE

(30) Priorité: 17.10.2012 FR 1202772
(43) Date de publication de la demande: 26.08.2015
(73) Titulaire: IFP Énergies nouvelles, 92852 Rueil-Malmaison Cedex (FR)
(72) Inventeur: SANZ, Elena, F-69005 Lyon (FR); BEAUMONT, Robert, F-69140 Rillieux La Pape (FR); BOYER, Christophe, F-69390 Charly (FR); GONNET, Daniel, F-91440 Bures Sur Yvette (FR)
(86) Numéro de dépôt international: PCT/FR2013/052243
(87) Numéro de publication internationale: WO 2014/060671

(56) Documents cités:
- EP-A1- 1 374 985
- WO-A1-2005/053833
- FR-A1- 2 950 822

## Description

### DOMAINE DE L'INVENTION

La présente invention se situe dans le domaine du chargement des tubes catalytiques utilisés dans des réacteurs tubulaires mettant en oeuvre des réactions fortement endothermiques ou fortement exothermiques. La présente invention est donc particulièrement adaptée au réacteur de vaporeformage de gaz naturel ou de diverses coupes hydrocarbonées en vue de la production du mélange CO+H₂ appelé gaz de synthèse.

On peut distinguer deux grandes familles de réacteurs de vaporeformage.

Les réacteurs dans lesquels la chaleur est apportée par un ensemble de brûleurs situés à l'intérieur du réacteur, et ceux dans lesquels la chaleur est apportée par un fluide caloporteur, généralement des fumées de combustion, ladite combustion ayant lieu à l'extérieur du réacteur de vaporeformage lui même.

Certains réacteurs de ce dernier type qu'on appelle dans la suite réacteur échangeur, font appel à des tubes simples. D'autres font appel à des tubes concentriques doubles également appelés tubes à baïonnette. Un tube à baïonnette peut se définir comme un tube intérieur entouré d'un tube extérieur coaxial au tube interne, l'espace annulaire compris entre le tube intérieur et le tube extérieur étant généralement rempli de catalyseur. Dans la suite du texte on parlera d'espace annulaire ou de zone catalytique pour désigner ledit espace annulaire défini par les tubes à baïonnette.

Dans le cadre de la présente invention, le gaz naturel, ou plus généralement la charge hydrocarbonée, est introduit(e) par la zone annulaire selon un écoulement de haut en bas, et les effluents réactionnels sont collectés dans la partie centrale du tube interne selon un écoulement de bas en haut.

La réaction de vaporeformage du gaz naturel pour la production d'hydrogène, est très endothermique et a donc généralement lieu dans des fours ou des réacteurs-échangeurs au sens précédemment défini.

La réaction a lieu a des températures très élevées, typiquement 900°C et sous pression, typiquement de 20 à 30 bars. Dans ces conditions, seule une mise en oeuvre de la réaction à l'intérieur de tubes peut être envisagée dans des conditions économiquement viables en raison de la tenue mécanique des matériaux.

Les réacteurs échangeurs catalytiques sont donc constitués d'une multitude de tubes, typiquement de l'ordre de 200 à 300 tubes pour des unités produisant 100 000 Nm³/h d'hydrogène, cet ensemble de tubes étant enfermé dans une calandre qui reçoit le fluide chaud permettant d'apporter les calories nécessaires à la réaction de vaporeformage.

Ce fluide chaud ou fluide caloporteur est généralement constitué par les fumées d'une combustion ayant lieu à l'extérieur du réacteur échangeur.

Le catalyseur doit donc être installé dans tous les tubes de vaporeformage de façon régulière d'un tube à l'autre, afin d'avoir une perte de charge identique d'un tube à l'autre.

Cette condition est très importante pour garantir une bonne répartition des réactifs sur l'ensemble des tubes catalytiques et éviter qu'un tube soit par exemple moins alimenté, ce qui pourrait conduire à une surchauffe importante du matériau constituant le tube, cette surchauffe réduisant d'autant la durée de vie du tube.

De même, il est important qu'aucun espace vide, c'est à dire sans catalyseur ou appauvri en catalyseur, ne subsiste dans un tube, car à nouveau le tube pourrait surchauffer localement, faute de réaction catalytique à l'intérieur. De plus, toute hétérogénéité dans la répartition du catalyseur dans la zone réactionnelle peut se traduire par un écoulement déséquilibré du ou des fluides réactionnels.

Le dispositif selon la présente invention vise donc un chargement à la fois dense et homogène entre chacun des tubes à baïonnette faisant partie du réacteur échangeur.

### EXAMEN DE L'ART ANTERIEUR

Nous nous limiterons dans cet examen au dispositif de type pneumatique.

Le brevet FR 2950822 de la demanderesse décrit une solution pour le chargement des tubes à baïonnette avec 3 tubes de chargement, avec freins mécaniques ou freinage pneumatique. Cette méthode de chargement permet un chargement dense et uniforme des tubes à baïonnette. S'agissant d'une méthode "grain par grain", elle s'avère trop lente et peu adaptée pour une mise en oeuvre à l'échelle d'un réacteur industriel comportant plusieurs centaines de tubes.

Le brevet EP1374985 décrit un système de chargement avec tube amovible pour l'introduction d'un écoulement gaz à contre courant qui freine la chute des particules. Ce système s'applique à des tubes classiques de vaporeformage de gaz naturel, mais il ne tient pas compte des spécificités des tubes à baïonnette.

Le dispositif selon la présente invention conduit à une réduction important du débit fourni par le tube d'amenée de gaz auxiliaire. La répartition entre un débit principal amené par le tube auxiliaire, et un débit fixe traversant le lit de particules en formation, conduit à une meilleure répartition des particules au sein du lit, et permet la récupération des fines particules éventuellement formées au cours du remplissage.

Aucun des documents trouvés ne concerne une application aux tubes à baïonnette avec chargement d'une zone annulaire.

Le dispositif objet de la présente invention peut donc se définir comme un dispositif pneumatique de chargement dense de catalyseur dans la zone annulaire des tubes à baïonnette équipant un réacteur échangeur de vaporeformage, le dispositif permettant un chargement homogène en densité dans chacun des tubes du réacteur échangeur en respectant une contrainte de temps compatible avec les impératifs d'un démarrage industriel.

De plus, dans un certain nombre de cas, le dispositif selon l'invention doit pouvoir s'adapter à des variations de diamètre intérieur du tube externe, imposées par les contraintes mécaniques et thermiques qui évoluent le long du tube, donc à un changement de dimensions de la zone annulaire. Aucun dispositif de l'art antérieur ne prend en compte cette contrainte supplémentaire.

### DESCRIPTION SOMMAIRE DES FIGURES

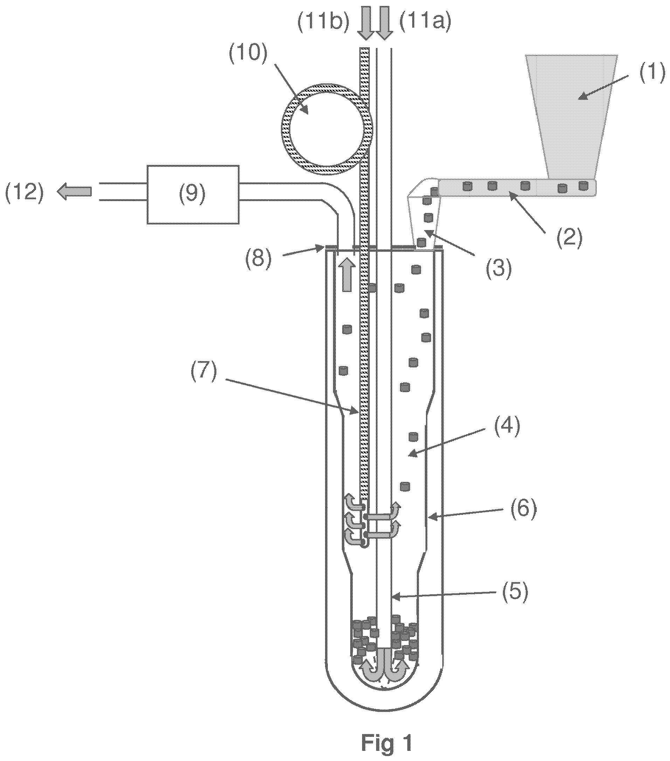

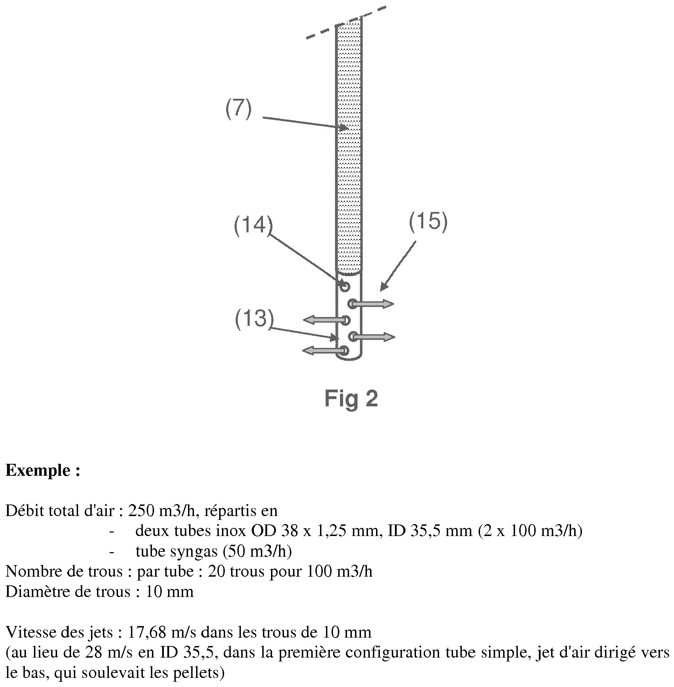

La figure 1 représente le dispositif utilisé dans la méthode selon l'invention dans lequel on a fait apparaitre le tube amovible souple (7) permettant d'amener une fraction (11b) du gaz nécessaire dans la zone annulaire (4), ainsi que le système d'enroulement (10) de ce dernier.

### DESCRIPTION SOMMAIRE DE L'INVENTION

La présente invention peut se définir comme une méthode utilisant un dispositif de remplissage dense du catalyseur dans un réacteur échangeur de vaporeformage consistant en une pluralité de tubes à baïonnette enfermés dans une calandre, chaque tube à baïonnette comportant une zone annulaire (4) au moins partiellement remplie de catalyseur.

Ledit catalyseur est constitué de particules solides occupant au moins en partie l'espace annulaire (4) compris entre un tube interne (5) et un tube externe (6), l'ensemble de ces deux tubes constituant le tube à baïonnette, la largeur dudit espace annulaire étant comprise entre 30 mm et 80 mm, et sa hauteur étant comprise entre 10 et 20 mètres.

Les particules de catalyseur ont généralement la forme de cylindres de hauteur approximativement 10 mm à 20 mm, et de diamètre approximativement 5 mm à 20 mm.

Le dispositif utilisé consiste dans sa version de base en :
- un tube souple amovible (7) pénétrant à l'intérieur de la zone annulaire (4) et maintenu à une distance de la surface du lit en formation comprise entre 50 mm et 100 mm, ledit tube amenant une fraction (11b) du débit de gaz nécessaire comprise entre 70% et 85%, la fraction complémentaire étant amenée par le tube interne (5),
- ledit tube amovible (7) s'enroulant autour d'un enrouleur (10) situé à l'extérieur du tube à remplir, et les particules de catalyseur étant contenues dans:
- une trémie centrale (1) permettant de délivrer les particules sur un tapis roulant ou un couloir vibrant (2) alimentant l'espace annulaire (4), par l'intermédiaire :
- d'un entonnoir (3), par lequel s'écoulent les particules à l'intérieur de l'espace annulaire (4).

Le tube amovible (7) peut être équipé à son extrémité d'un embout fermé dans la section de sortie mais ouvert pour la sortie du gaz par une série d'orifices latéraux disposés sur une ou plusieurs rangées. Typiquement le diamètre des orifices est compris entre 10 et 15 mm et l'espacement entre rangée d'orifices est compris entre 15 et 30 mm, chaque rangée comportant de 3 à 8 orifices.

L'intérêt de ces orifices latéraux est d'éviter la formation d'un jet de gaz orienté verticalement (c'est à dire dans l'axe du tube) et qui peut perturber la surface du lit de particules en formation si l'on ne respecte pas une distance suffisante entre l'extrémité du tube (7) et ladite surface du lit.

L'embout à orifices latéraux permet donc d'approcher davantage le tube (7) de la surface du lit, tout en maintenant une certaine hauteur de chute des particules non freinées. En effet sans embout à orifices latéraux, l'effet de freinage des particules se produit jusqu'à ce qu'elles atteignent la surface du lit. Avec un embout à orifices latéraux, le gaz introduit remonte beaucoup plus vite vers le haut, pratiquement des sa sortie des orifices latéraux, et il existe donc une portion terminale du trajet des particules sur laquelle elles ne sont pas freinées.

Cette portion terminale non freinée est intéressante, car elle permet de garantir la densité du chargement. Et par ailleurs cette portion terminale non freinée ne doit pas être trop importante pour éviter la casse des particules. Elle peut donc être bien contrôlée par l'utilisation d'un embout à orifices latéraux qui permet un ajustement de la dite hauteur de chute non freinée.

La présente invention consiste ainsi en une méthode de chargement du catalyseur faisant appel au dispositif précédemment décrit, méthode qui peut se décrire par la suite d'étapes suivantes :
- le tube amovible souple (7) est initialement enroulé dans l'enrouleur externe (10), la trémie (1) étant remplie de solide,
- le tube amovible souple (7) est introduit progressivement dans la zone annulaire (4) par sa partie supérieure jusqu'à ce que son extrémité inférieure se situe à une distance comprise entre 50 cm et 100 cm par rapport au fond du tube.
- un débit de gaz constant est introduit par le tube central (5) correspondant à une vitesse dans l'espace annulaire (4) comprise entre 0,1 m/s et la vitesse minimal de fluidisation des grains de catalyseur (entre 3 et 4 m/s pour les catalyseurs classiques de vaporeformage),
- un autre débit de gaz est introduit par le tube souple amovible (7), la somme des 2 débits correspondant à une vitesse dans l'espace annulaire comprise entre 8 m/s et 14 m/s, toujours inférieure à la vitesse terminale de chute des particules.
- le tapis roulant ou le couloir vibrant (2) est mis en route de manière à fournir un débit de solide compris entre 250 kg/h et 500 kg/h, solide qui est introduit dans la zone annulaire (4) par l'intermédiaire de l'entonnoir (3),
- au fur et à mesure que la zone annulaire (4) se remplit, le tube amovible souple (7) est remonté de la zone annulaire (4) à l'aide de l'enrouleur externe (10), de manière à respecter une distance constante par rapport à la surface du lit qui se constitue progressivement, ladite distance étant toujours comprise entre 50 cm et 100 cm,
- le tube amovible souple (7) est enroulé avec une vitesse équivalente à la vitesse de chargement du tube comprise entre 0,2 mètre/min et 0,4 mètre/min.
- une fois le tube à baïonnette chargé et le système de chargement enroulé, le tube amovible souple (7) est déplacé pour le chargement du tube suivant.

Le gaz utilisé pour la mise en oeuvre de la méthode de chargement selon l'invention est généralement de l'air ou de l'azote.

En fonction des débits de particules solides à charger, on peut utiliser deux ou trois tubes amovibles souples (7) identiques et fonctionnant en parallèle. Dans la suite du texte lorsqu'on parle d'un tube amovible souple (7), il faut donc entendre du ou des tubes amovibles souples (7).

De plus une trémie de chargement (1) peut alimenter un groupe de deux ou trois tubes à baïonnette, chacun muni d'un dispositif selon la présente invention.

### DESCRIPTION DETAILLÉE DE L'INVENTION

La présente invention peut se définir comme une méthode utilisant un dispositif permettant le chargement dense de catalyseur dans l'espace annulaire (4) de tubes à baïonnette, chaque tube ayant une hauteur comprise entre 10 et 20 m, un diamètre du tube externe (6) compris entre 250 mm et 150 mm, et un diamètre externe du tube interne (5) compris entre 10 et 40 mm.

L'espace annulaire (4) contenant le catalyseur a donc une largeur caractéristique d'environ 50 mm. Dans la pratique, selon les cas, la largeur caractéristique de l'espace annulaire (4) pourra varier entre 80 et 30 mm.

De plus, dans certains cas, le tube externe (6) a un diamètre décroissant de haut en bas par tronçons, ce qui signifie que la largeur caractéristique de l'espace annulaire (4) diminue également en allant de haut en bas.

Le dispositif selon l'invention permet une adaptation très facile à ces variations de largeur caractéristique tout en conservant ses performances sur l'ensemble des tronçons.

L'adaptation consiste alors en un ajustement du débit de gaz introduit par le tube amovible souple (7) de manière à respecter la fourchette de vitesse de 8 à 14 m/s.

Les grains de catalyseur ont généralement la forme de cylindres d'environ 10 mm à 20 mm de hauteur et 5 mm à 20 mm de diamètre.

Un des problèmes majeurs posés par leur chargement dans des tubes de plus de 10 mètres de longueur est le risque de casse de ces grains si on les faisait simplement tomber en chute libre sans aucune précaution, ce qui est une des solutions de l'art antérieur pour réaliser un chargement dense. On admet généralement que le risque de casse des grains est important à partir d'une hauteur de chute de 1 mètre.

D'autres problèmes sont liés à la géométrie même de l'espace catalytique annulaire, qui interdit le passage des systèmes de chargement classiques.

Dans un cas fréquent dans le contexte de la présente invention, il faut tenir compte du tube interne (5) qui traverse le tube externe (6) dans la partie supérieure de la zone annulaire (4) pour permettre une sortie totalement dégagée des effluents réactionnels.

Enfin, comme indiqué dans l'art antérieur, le risque de formation de voûte est accentué lorsque le ratio entre le diamètre du tube et la dimension principale des particules est inférieur à 8, ce qui est souvent le cas dans le contexte de la présente invention, puisque la largeur typique de l'espace annulaire (50 mm) équivaut à environ 4 fois le diamètre caractéristique des particules de catalyseur.

Une contrainte importante que doit également respecter le dispositif de chargement, est que le chargement se faisant tube par tube, ou par un groupe limité de deux ou trois tubes, il doit être suffisamment rapide pour une utilisation industrielle, car un réacteur de vaporeformage visant une production d'environ 100 000 Nm³/h d'H₂ compte environ de 200 à 350 tubes à baïonnette.

La présente invention décrit un système de chargement d'un tube à baïonnette au moyen d'un écoulement de gaz, généralement de l'air, à contre-courant de la chute des particules, qui ralentit donc la chute desdites particules en évitant ainsi leur cassure, et permet un chargement homogène et sans blocage.

La vitesse terminale de chute des grains considérés est d'environ 14 m/s. Pour éviter la rupture des grains, les particules doivent tomber avec une vitesse inférieure à 3 m/s et préférentiellement inférieure à 2 m/s.

La vitesse du courant de gaz doit être comprise entre 11 m/s et 13 m/s pour obtenir une chute ralentie des particules. L'obtention d'une telle vitesse dans l'espace annulaire (4) nécessite l'introduction d'un débit de gaz important. L'introduction d'un tel débit par le tube interne (5) de diamètre typiquement compris entre 30 mm et 50 mm peut générer de trop fortes vitesses à l'intérieur de ce tube, pouvant même aller jusqu'à un écoulement sonique.

Dans la présente invention, le débit de gaz nécessaire au ralentissement convenable des particules est obtenu en deux parties; une partie constante du débit nécessaire au ralentissement des particules est introduite par le tube interne (5) de la baïonnette, la partie complémentaire étant introduite par un tube amovible souple (7) débouchant au dessus du lit de particules en formation à une distance d'entre 50 mm et 100 mm.

L'écoulement à l'intérieur du tube interne (11a) est tel qu'il génère une vitesse dans l'espace annulaire (4) qui est inférieure à la vitesse minimale de fluidisation des grains de catalyseur comprise entre 3 et 4 m/s, afin de maintenir le lit de particules en formation à l'état de lit fixe, mais d'emporter les particules fines qui ont pu être générées pendant le chargement.

La partie complémentaire du débit de gaz (11b) est introduite par un tube souple amovible (7), dont le diamètre varie entre 0,5 et 0,9 fois la largeur de l'espace annulaire (du plus petit des espaces annulaires dans le cas d'un tube avec changement de diamètre interne du tube externe).

La vitesse dans l'espace annulaire (4) en aval du lit de particules en suivant le sens de l'écoulement gaz, calculée à partir de la somme des débits introduits par les tubes amovible (7) et interne (5), doit être entre 2 m/s et 4 m/s inférieure à la vitesse terminale de chute (environ 13 - 14 m/s pour des grains classiques de vaporeformage), de manière à assurer le ralentissement efficace des particules sans provoquer une remontée des grains dans le sens de l'écoulement de gaz. Le tube amovible souple (7) est remonté au fur et à mesure que le lit de particules se forme dans la zone annulaire (4).

Le chargement se fait en vrac par l'ouverture supérieure de la zone annulaire (4) du tube à baïonnette, au moyen d'une trémie de chargement (1) et d'un couloir vibrant ou tapis roulant (2).

Entre le couloir vibrant (2) et le tube baïonnette un accouplement souple (3) est utilisé pour canaliser le catalyseur tout en empêchant la transmission des vibrations aux tubes. Le système de chargement de solide (trémie (1), couloir ou tapis vibrant (2) et accouplement souple (3)) doit être fermé et étanche, pour éviter la sortie du gaz à travers le dispositif de chargement. Une étanchéité (8) doit également être assurée à l'entrée de l'espace annulaire (4).

L'écoulement d'air en sortie du tube à baïonnette, chargé en fines particules, passe à travers un filtre (9) qui permet la rétention des poussières et l'expulsion d'un gaz propre (12). L'ensemble des étanchéités assure le passage du gaz à travers uniquement le système de filtration (9).

Les variations de section de la zone annulaire (4) sont prises en compte par une variation du débit de gaz introduit par le tube amovible souple (7). Le débit de gaz introduit par le tube interne (5) reste généralement constant.

### EXEMPLE SELON L'INVENTION

Des essais de chargement ont été réalisés avec le dispositif utilisé dans la méthode selon l'invention dans une colonne
expérimentale de 1 m de hauteur, constituée d'un tube interne (5) de diamètre externe 42 mm et diamètre interne 32,2 mm, et d'un tube externe (6) de diamètre interne 128,1 mm.

Les particules de solide à charger ont la forme de petits cylindres de hauteur 1,5 cm et de diamètre 0,8 cm.

Un tube souple amovible (7) de diamètre interne 30 mm est introduit par l'espace annulaire et est maintenu à une distance de 50 cm de la surface du lit. Le dispositif est relevé en continu à une vitesse de 0,3 m/min.

Un débit d'air de 0,0345 m³/s est introduit par le tube interne (5), ce qui correspond à une vitesse de 42,4 m/s à l'intérieur du tube interne.

Un débit de 0,0897 m³/s est introduit par le tube amovible (7), ce qui correspond à une vitesse de 127 m/s à l'intérieur du tube amovible. Au total, un débit de 0,1242 m³/s traverse la fraction vide de l'espace annulaire (4), générant une vitesse de 10,8 m/s.

La vitesse terminale de chute des particules ayant été mesurée à 13,8 m/s, les particules tombent avec une vitesse de 3 m/s.

Le débit introduit par le tube interne (5) qui traverse le lit fixe (0,0345 m³/s) génère une vitesse ascendant dans l'espace annulaire (4) de 3 m/s, inférieure à la vitesse minimale de fluidisation (estimée à 3,76 m/s), mais suffisante pour entrainer les fines particules.

Une fois le lit chargé, la mesure de ΔP est mesurée avec un débit d'air de 130 Nm³/h.

Après déchargement, les particules cassées sont isolées du lot. Le taux de casse est très faible, de l'ordre de 0,5%.

Les résultats du chargement sont montrés dans le tableau 1 ci-dessous.

Le chargement obtenu avec ce système est très satisfaisant, avec une très bonne reproductibilité en termes de perte de charge (écarts à la moyenne inférieurs à ± 3%).

Le temps de chargement se situe entre 3 et 4 minutes/mètre, ce qui correspond à un temps maximum de 48 minutes pour un tube de 12 m (pour un débit de solide d'environ 320 kg/h).

La densité de chargement est de 968 kg/m³, reproductible dans tous les chargements.

**Tableau 1 : résultats des chargements avec système à pneumatique sur maquette de 1 m.**

| **Temps de chargement (min)** | **Temps de déchargement (min)** | **Hauteur de solide (cm)** | **Densité de chargement (kg/m³)** | **Perte de charge (mm H₂O)** | **Écart à la moyenne** | **Taux de brisure** |
|---|---|---|---|---|---|---|
| 3'31" | 10' | 98 | 968 | 270 | 0,37% | 0,51% |
| 3'20" | 9' | 98 | 968 | 262 | -2,6% | 0,53% |
| 3'90" | 10' | 98 | 968 | 277 | +2,97% | 0,55% |
| | | | | | | |
| | | Moyenne perte de charge | | 269 | | |

## Revendications

1. Méthode de chargement de particules de catalyseur spécialement adapté à un réacteur échangeur de vaporeformage consistant en une pluralité de tubes à baïonnette enfermés dans une calandre, le lit catalytique étant constitué de particules occupant au moins en partie l'espace annulaire (4) compris entre un tube interne (5) et un tube externe (6), l'ensemble de ces deux tubes constituant un tube à baïonnette, la largeur dudit espace annulaire (4) étant comprise entre 40 mm et 80 mm, et sa hauteur comprise entre 10 et 20 mètres, lesdites particules de catalyseur ayant la forme de cylindres de hauteur approximativement comprise entre 10 mm et 20 mm, et de diamètre approximativement compris entre 5 mm et 20 mm, ladite méthode de chargement utilisant un dispositif de remplissage dense du catalyseur consistant en :
- un tube souple amovible (7) pénétrant à l'intérieur de la zone annulaire (4) et maintenu à une distance de la surface du lit en formation comprise entre 150 mm et 200 mm, ledit tube amenant la fraction principale du débit de gaz nécessaire comprise entre 70% et 85%, la fraction complémentaire étant amenée par le tube interne (5), le diamètre dudit tube amovible souple (7) étant compris entre 0,5 et 0,9 fois la largeur de l'espace annulaire (4) (du plus petit des espaces annulaires(4) dans le cas d'un tube externe (6) avec changement de diamètre),.
- ledit tube amovible (7) s'enroulant autour d'un enrouleur (10) situé à l'extérieur du tube à remplir, et les particules de catalyseur étant contenues dans :
- une trémie centrale (1) permettant de délivrer les particules sur un tapis roulant ou couloir vibrant (2) alimentant l'espace annulaire (4), par l'intermédiaire :
- d'un entonnoir (3), par lequel s'écoulent les particules à l'intérieur de l'espace annulaire (4). et ladite méthode de chargement dense étant **caractérisée par** la suite d'étapes suivantes :
- le tube amovible souple (7) est initialement enroulé dans l'enrouleur externe (10), la trémie (1) étant remplie de solide,
- le tube amovible souple (7) est introduit progressivement dans la zone annulaire (4) par sa partie supérieure jusqu'à ce que son extrémité inférieure se situe à une distance comprise entre 50 cm et 100 cm par rapport au fond du tube.
- un débit de gaz constant est introduit par le tube central (5) correspondant à une vitesse dans le espace annulaire comprise entre 0,1 m/s et la vitesse minimal de fluidisation des grains de catalyseur (entre 3 et 4 m/s pour les catalyseurs classiques de vaporeformage), et un autre débit de gaz est introduit par le tube amovible (7), la somme des 2 débits correspondant à une vitesse dans l'espace annulaire comprise entre 8 m/s et 14 m/s, toujours inférieure à la vitesse terminale de chute des particules.
- le tapis roulant ou le couloir vibrant (2) est mis en route de manière à fournir un débit de solide compris entre 250 kg/h et 500 kg/h, solide qui est introduit dans la zone annulaire (4) par l'intermédiaire de l'entonnoir (3),
- au fur et à mesure que la zone annulaire (4) se remplit, le tube amovible souple (7) est remonté de la zone annulaire (4) à l'aide de l'enrouleur externe (10), de manière à respecter une distance constante par rapport à la surface du lit qui se constitue progressivement, ladite distance étant toujours comprise entre 50 cm et 100 cm,
- le tube amovible souple (7) est enroulé avec une vitesse équivalente à la vitesse de chargement du tube comprise entre 0,2 m/min et 0,4 m/min.
- une fois le tube baïonnette chargé et le système de chargement enroulé, le tube amovible souple (7) est déplacé pour le chargement du tube suivant.

2. Méthode de chargement du catalyseur selon la revendication 1, dans laquelle le gaz utilisé est de l'air ou de l'azote.

## Patentansprüche

1. Verfahren zum Laden von Katalysatorteilchen, insbesondere eingerichtet für einen Dampfreformierungsreaktor-Tauscher, der aus mehreren Bajonettrohr besteht, die in einem Kalander eingeschlossen sind, wobei das Katalysatorbett aus Teilchen besteht, die mindestens teilweise den ringförmigen Raum (4) einnehmen, der zwischen einem inneren Rohr (5) und einen äußeren Rohr (6) angeordnet ist, wobei die Einheit dieser beiden Rohr ein Bajonettrohr bildet, wobei die Breite des ringförmigen Raums (4) zwischen 40 mm und 80 mm und seine Höhe zwischen 10 und 20 Metern liegt, wobei die Katalysatorteilchen die Form eines Zylinders mit einer Höhe von ungefährzwischen 10 mm und 20 mm und mit einem Durchmesser von ungefährzwischen5 mm und 20 mm aufweisen, wobei das Ladeverfahren eine Vorrichtung zum dichten Füllen des Katalysators verwendet, bestehend aus:
- einem abnehmbaren elastischen Rohr (7), das in das Innere der ringförmigen Zone (4) eindringt und in einer Distanz von der Oberfläche des gebildeten Betts zwischen 150 mm und 200 mm gehalten wird, wobei das Rohr die Hauptfraktion des notwendigen Gasdurchflusses zwischen 70 % und 85 % führt, wobei die komplementäre Fraktion von dem inneren Rohr (5) geführt wird, wobei der Durchmesser des elastischen abnehmbaren Rohrs (7) zwischen dem 0,5- bis 0,9-Fachen der Breite des ringförmigen Raums (4) beträgt (des kleinsten der ringförmigen Räume (4) in dem Fall eines äußeren Rohrs (6) mit einer Durchmesseränderung),
- wobei das abnehmbare Rohr (7) um einen Wickler (10) gewickelt ist, der außerhalb des zu füllenden Rohrs angeordnet ist, und die Katalysatorteilchen enthalten sind in:
- einem zentralen Trichter (1), der es gestattet, die Teilchen auf ein Förderband oder in eine Schüttrinne (2) abzugeben, die den ringförmigen Raum (4) versorgt, mit Hilfe:
- eines Einfüllschachts (3), durch den die Teilchen in das Innere des ringförmigen Raums (4) rieseln,
und wobei das Verfahren zum dichten Laden durch die Abfolge der folgenden Schritte gekennzeichnet ist:
- das nachgiebige abnehmbare Rohr (7) ist anfänglich in dem äußeren Wickler (10)aufgewickelt, wobei der Trichter (1) mit Feststoff gefüllt wird,
- das nachgiebige abnehmbare Rohr (7) wird allmählich in die ringförmige Zone (4) durch ihren oberen Teil eingeführt, bis sein unteres Ende in einer Distanz zwischen 50 cm und 100 cm in Bezug auf den Boden des Rohres angeordnet ist,
- ein konstanter Gasdurchfluss wird durch das zentrale Rohr (5) eingebracht, der einer Geschwindigkeit in dem ringförmigen Raum zwischen 0,1 m/s und der minimalen Fluidisierungsgeschwindigkeit von Katalysatorkörnern entspricht (zwischen 3 und 4 m/s für herkömmliche Dampfreformierungskatalysatoren), und ein anderer Gasdurchfluss wird durch das abnehmbare Rohr (7) eingebracht, wobei die Summe der beiden Durchflüsse einer Geschwindigkeit in dem ringförmigen Raum zwischen 8 m/s und 14 m/s entspricht, weiterhin unter der Endfallgeschwindigkeit der Teilchen,
- das Förderband oder die Schüttrinne (2) wird in Gang gesetzt, um einen Durchfluss an Feststoff zwischen 250 kg/h und 500 kg/h zu liefern, wobei der Feststoff in die ringförmige Zone (4) mit Hilfe des Einfüllschachts (3) eingebracht wird,
- in dem Maße, in dem sich die ringförmige Zone (4) füllt, wird das nachgiebige abnehmbare Rohr (7) in der ringförmigen Zone (4) mit Hilfe des äußeren Wicklers (10) erneut hochgeführt, um eine konstante Distanz in Bezug auf die Oberfläche des Betts einzuhalten, das sich progressiv bildet, wobei die Distanz immer zwischen 50 cm und 100 cm liegt,
- das nachgiebige abnehmbare Rohr (7) wird mit einer Geschwindigkeit äquivalent zur Ladegeschwindigkeit des Rohrs zwischen 0,2 m/min und 0,4 m/min aufgewickelt,
- sobald das Bajonettrohr geladen ist und das Ladesystem aufgewickelt ist, wird das nachgiebige abnehmbare Rohr (7) für das Laden des folgenden Rohres bewegt.

2. Verfahren zum Laden eines Katalysators nach Anspruch 1, wobei das verwendete Gas Luft oder Stickstoff ist.

## Claims

1. A method of loading catalyst particles especially adapted for a steam reforming exchanger reactor consisting of a plurality of bayonet tubes enclosed in a shell, the catalytic bed being formed by particles occupying at least in part the annular space (4) between an internal tube (5) and an external tube (6), the assembly of said two tubes constituting a bayonet tube, the width of said annular space (4) being between 40 mm and 80 mm, and its height being between 10 and 20 metres, the catalyst particles being in the form of cylinders with a height approximately between 10 mm and 20 mm, and a diameter approximately between 5 mm and 20 mm, the loading method using a device for dense filling of the catalyst, comprising:
- a detachable flexible tube (7) passing into the interior of the annular zone (4) and being maintained at a spacing from the surface of the bed being formed comprised of between 150 mm and 200 mm, said tube supplying the main fraction of the necessary gas flow rate of between 70% and 85%, the complementary fraction being supplied by the internal tube (5), the diameter of said detachable flexible tube (7) being between 0.5 and 0.9 times the width of the annular space (4) (of the smallest of the annular spaces (4) in the case of an external tube (6) with a change in diameter),
- said detachable tube (7) being wound around a winder (10) disposed outside of the tube to be filled, and the catalyst particles being contained in:
- a central hopper (1) making it possible to deliver the particles on a conveyor belt or a vibrating conveyor (2) feeding the annular space (4), by way of:
- a funnel (3), through which the particles flow into the interior of the annular space (4), and said dense loading method being **characterised by** the succession of the following steps;
- the detachable flexible tube (7) is initially wound in the external winder (10), the hopper (1) being filled with solid,
- the detachable flexible tube (7) is introduced progressively into the annular zone (4) with its upper part until its lower end is at a spacing of between 50 cm and 100 cm with respect to the bottom of the tube,
- a constant gas flow rate is introduced by the central tube (5) corresponding to a velocity in the annular space of between 0.1 m/s and the minimum fluidising velocity of the catalyst grains (between 3 and 4 m/s for the conventional steam reforming catalysts), and another gas flow rate is introduced by the detachable tube (7), the sum of the 2 flow rates corresponding to a velocity in the annular space of between 8 m/s and 14 m/s, which is still less than the terminal falling velocity of the particles,
- the conveyor belt or the vibrating conveyor (2) is started in such a way as to provide a flow rate of solid of between 250 kg/h and 500 kg/h, which solid is introduced into the annular zone (4) by way of the funnel (3),
- as the annular zone (4) fills up the detachable flexible tube (7) is raised from the annular zone (4) by means of the external winder (10), in such a way that a constant spacing is maintained with respect to the surface of the bed which is progressively building up, said spacing always being between 50 cm and 100 cm,
- the detachable flexible tube (7) is wound up at a speed which is equivalent to the loading speed of the tube which is between 0.2 m/min and 0.4 m/min,
- once the bayonet tube is loaded and the loading system is wound up the detachable flexible tube (7) is displaced for loading of the next tube.

2. A method of loading catalyst according to claim 1 in which the gas used is air or nitrogen.
